# EUROPÄISCHE PATENTSCHRIFT

(11) **EP 3 711 988 B1**
(45) Veröffentlichungstag und Bekanntmachung des Hinweises auf die Patenterteilung: **23.08.2023**
(21) Anmeldenummer: 20159832.3
(22) Anmeldetag: 27.02.2020
(51) Int. Cl.: B60J 5/04

(54) **TRÄGERBAUTEIL MIT BEFESTIGUNGSBEREICH AUS EINEM FASERVERBUNDWERKSTOFF UND MINDESTENS EINEM EIN BEFESTIGUNGSELEMENT ARRETIERENDEN STÜTZELEMENT**
SUPPORT COMPONENT WITH FASTENING AREA MADE OF A FIBRE COMPOSITE MATERIAL AND AT LEAST ONE SUPPORTING ELEMENT LOCKING A FIXING ELEMENT
COMPOSANT SUPPORT DOTÉ D'UNE ZONE DE FIXATION DE MATIÈRE COMPOSITE RENFORCÉE PAR DES FIBRES ET D'AU MOINS UN ÉLÉMENT DE SUPPORT BLOQUANT UN ÉLÉMENT DE FIXATION

(30) Priorität: 21.03.2019 DE 102019203906
(43) Veröffentlichungstag der Anmeldung: 23.09.2020
(73) Patentinhaber: Brose Fahrzeugteile SE & Co. Kommanditgesellschaft, Bamberg, 96052 Bamberg (DE)
(72) Erfinder: THIENEL, Michael, 95349 Thurnau (DE); CARL, André, 96450 Coburg (DE); HOFMANN, Dominik, 96148 Baunach (DE); MERKLE, Sebastian, 97496 Burgpreppach (DE)
(74) Vertreter: Maikowski & Ninnemann Patentanwälte Partnerschaft mbB

(56) Entgegenhaltungen:
- DE-A1-102012 023 588
- DE-U1-202011 103 327
- US-A1- 2006 283 091
- US-B2- 8 172 305

## Beschreibung

Die vorgeschlagene Lösung betrifft eine Trägerbaugruppe für ein Fahrzeug sowie ein Montageverfahren.

Eine Trägerbaugruppe für ein Fahrzeug umfasst typischerweise ein Trägerbauteil zur Festlegung von Funktionskomponenten. Dokument US 8 172 305 B2 offenbart eine solche Trägerbaugruppe. Beispielsweise handelt es sich bei dem Trägerbauteil um einen Aggregateträger für eine Fahrzeugtür, an dem Funktionskomponenten eines Fensterhebers für die Verstellung einer Fensterscheibe festgelegt sind. Ein Trägerbauteil muss hierbei grundsätzlich über mindestens eine Befestigungsstelle an einem Fahrzeugbauteil, z.B. in Form eines Türinnenblechs einer Fahrzeugtür, festgelegt werden. Hierfür weist das Trägerbauteil mindestens eine Befestigungsstelle auf, an der ein Befestigungselement, zum Beispiel eine Schraube, ein Bolzen oder ein Niet, mit einem Befestigungsabschnitt durch eine Durchgangsöffnung entlang einer Anbringungsrichtung durch das Material des Trägerbauteils geführt ist. Der durch das Material des Trägerbauteils hindurchdurchgeführte Befestigungsabschnitt ist dann an dem Fahrzeugbauteil fixiert und hierüber das Trägerbauteil an dem Fahrzeugbauteil festgelegt.

Es ist bereits aus der Praxis vielfach bekannt, Trägerbauteile, insbesondere für Fahrzeugtüren, aus einem Kunststoffmaterial herzustellen. Um hierbei dann Befestigungs- und Betriebskräfte dauerhaft zuverlässig zu übertragen, werden häufig Blechbuchsen zur Definition der Befestigungsstellen vorgesehen. Diese Blechbuchsen sollen ein Kriech- und Setzverhalten vermeiden, wie es bei einer Kunststoffverschraubung auftreten würde. Schraub- oder Nietverbindung, die ein direktes Klemmen des Kunststoffmaterials auf einem Fügepartner in Form des Fahrzeugbauteils beabsichtigen, sind in der Regel aufgrund des Kriech- und Setzverhaltens nicht auf Dauer angelegt, da sich das Anzugsmoment mit der Zeit verringert. Die Verbindung verliert damit an Festigkeit.

Es besteht vor diesem Hintergrund Bedarf für eine verbesserte Trägerbaugruppe sowie ein verbessertes Verfahren zur Montage einer Trägerbaugruppe und insbesondere eines Trägerbauteils an ein Fahrzeugbauteil.

Die vorgeschlagene Lösung schafft in dieser Hinsicht Abhilfe. Hierbei ist für eine Trägerbaugruppe vorgeschlagen, dass eine Befestigungsstelle für das Befestigungselement an einem Befestigungsbereich des Trägerbauteils aus einem Faserverbundwerkstoff vorgesehen ist. Der Befestigungsbereich gibt hierbei eine Position für die durch das Anbringen des Befestigungselements entlang einer Anbringungsrichtung (erst) noch auszubildende Durchgangsöffnung vor und bildet mindestens ein entlang der Anbringungsrichtung vorstehendes Stützelement aus, an dem ein Kopfabschnitt des Befestigungselements wenigstens kraftschlüssig anliegt, wenn sich der (von dem Kopfabschnitt entlang der Anbringungsrichtung weg erstreckende) Befestigungsabschnitt des Befestigungselements bestimmungsgemäß durch das Material des Trägerbauteils hindurch erstreckt.

Durch den Faseranteil und die typischerweise geringe Dichte kriechen Faserverbundwerkstoffe nur wenig, was dazu führt, dass im Bereich der Befestigungsstelle kein nennenswertes Setzverhalten und ein dadurch verursachtes Absinken eingestellter Klemmkräfte auftreten. Indem der Faserverbundwerkstoff an der Befestigungsstelle nicht bereits mit einer Durchgangsöffnung versehen und damit vorgelocht ist, wird zusätzlich eine spielfreie Verbindung unterstützt. Das Stützelement für die wenigstens kraftschlüssige Anlage eines zu dem Befestigungsabschnitt verschiedenen Kopfabschnitts des Befestigungselements arretiert ferner das Befestigungselement zusätzlich und gewährleistet eine Übertragung von an der Befestigungsstelle auftretenden Belastungen auch über das Stützelement hinweg. Dies ermöglicht im Vergleich zu bisher üblichen Trägerbaugruppen die Übertragbarkeit vergleichsweise sehr hoher Kräfte im Bereich einer Befestigungsstelle. Das entlang der Anbringungsrichtung vorstehende und damit den Kopfabschnitt seitlich abstützende Stützelement stellt hierbei z.B. eine wenigstens kraftschlüssige Anlage des Kopfabschnitts sicher, wenn der Befestigungsabschnitt des Befestigungselements zur Festlegung des Trägerbauteils an dem Fahrzeugbauteil vollständig und damit bestimmungsgemäß durch das Material des Trägerbauteils hindurchgeführt ist.

Beispielsweise ist der Befestigungsbereich mit der Befestigungsstelle durch ein Organoblech gebildet. Dies schließt insbesondere ein, dass nicht nur der Befestigungsbereich, sondern auch ein Großteil des Trägerbauteils und gegebenenfalls insbesondere eine durch das Trägerbauteil definierte Trägerfläche für die Anordnung von Funktionskomponenten aus Organoblech gebildet ist. Unter einem Großteil wird hierbei verstanden, dass das Trägerbauteil zu einem wesentlichen Teil durch Organoblech gebildet ist und damit das Organoblech gerade denjenigen Teil des Trägerbauteils bildet, der den Großteil der unter normalen Betriebsbedingungen auftretenden Kräfte erfährt. Ein (zum Beispiel eine oder mehrere Führungsschienen tragender, zusammenhängender) Teil des Trägerbauteils aus Organoblech oder mehrere (zum Beispiel eine oder mehrere Führungsschienen tragenden) Teile des Trägerbauteils aus Organoblech erstrecken sich somit beispielsweise über etwa 30% oder mehr einer Fläche des Trägerbauteils. Grundsätzlich kann sich das Organoblech somit über mehr als 30%, insbesondere über mehr als 40% und in der Regel über mindestens 50% einer Trägerfläche des Trägerbauteils erstrecken, sodass das Organoblech damit auch einen entsprechenden Anteil von mehr als 30%, insbesondere mehr als 40% oder etwa 50% oder mehr der Oberfläche des Trägerbauteils in einer durch das Trägerbauteil definierten Hauptebene bildet.

Ein Hauptbestandteil nicht nur des Befestigungsbereichs des Trägerbauteils kann beispielsweise ein plattenförmiges Halbzeug sein, welches aus einem Organoblech besteht. Somit kann das Organoblech eine im Wesentliche flächige Ausdehnung des Trägerbauteils definieren, kann aber durch weitere Komponenten und Materialien ergänzt sein. So können beispielsweise metallische Elemente und/oder Kunststoffelemente in das Organoblech eingearbeitet oder an dem Organoblech angebracht, insbesondere hieran gespritzt sein.

In einer Ausführungsvariante ist das Stützelement von einem Abschnitt mindestens einer an dem Trägerbauteil ausgeformten Rippe gebildet. Eine solche Rippe kann beispielsweise durch den Faserverbundwerkstoff gebildet sein, der auch für die Ausbildung des Befestigungsbereichs selbst vorgesehen ist. Alternativ kann es sich um ein anderes Material, insbesondere aber ebenfalls um einen Faserverbundwerkstoff handeln. Im letztgenannten Fall ist die Rippe dann beispielsweise an den Befestigungsbereich und hier insbesondere an ein den Befestigungsbereich bildendes Organoblech angespritzt. Beispielsweise ist die Rippe durch langfaserverstärktes Polypropylen (PP-LGF) gebildet.

Für die Unterstützung einer sicheren kraftschlüssigen Anlage und zur Bereitstellung einer zusätzlichen formschlüssigen Verbindung des Kopfabschnitts des Befestigungselements an dem Stützelement kann das Stützelement eine konkav gewölbte Innenwand definieren, an der der Kopfabschnitt kraftschlüssig anliegt. Diese konkav gewölbte Innenwand kann beispielsweise dem Verlauf eines Kreisbogens folgen. Die konkav gewölbte Innenwand erstreckt sich somit entlang eines Kreisbogens, wobei diese Kontur der Innenwand dann mit einer Kontur des anliegenden Kopfabschnitts korrespondiert, sodass im bestimmungsgemäß fixierten Zustand des Trägerbauteils an dem Fahrzeugbauteil ein Linienkontakt oder gegebenenfalls sogar ein Flächenkontakt an der konkav gewölbten Innenwand zwischen dem Stützelement und dem Kopfabschnitt vorhanden ist. Hierdurch lassen sich Belastungen an der Befestigungsstelle effektiv insbesondere über das Stützelement absorbieren.

Beispielsweise definiert das Stützelement eine im Querschnitt kreisförmige Aufnahme für den Kopfabschnitt des Befestigungselements. Der Kopfabschnitt des Befestigungselements kann hierbei einen ebenfalls im Querschnitt kreisförmigen Bereich ausbilden, der in der kreisförmigen Aufnahme des Stützelements formschlüssig aufgenommen und über den Kraftschluss an dem Stützelement hierin klemmend gehalten ist. Der Kopfabschnitt des Befestigungselements kann somit insbesondere kreisscheibenförmig ausgestaltet sein. Das Stützelemente kann wiederum als umlaufende Ringrippe ausgestaltet sein, die die kreisförmige Aufnahme für den Kopfabschnitt des Befestigungselements umrandet.

Für den zusätzlichen Toleranzausgleich kann an dem Stützelement wenigstens eine Schaberippe für eine Verbindung mit dem Kopfabschnitt des Befestigungselements ausgebildet sein. Hierüber lässt sich ein Kraftschluss zwischen dem Kopfabschnitt und dem Stützelement, insbesondere eine Verpressung, zusätzlich unterstützen und die spielfreie Arretierung über die Anlage des Kopfabschnitts an dem Stützelement gewährleisten.

Alternativ oder ergänzend kann für eine entsprechende Unterstützung der kraftschlüssigen Anlage des Kopfabschnitts an dem Stützelement der Kopfabschnitt in Anbringungsrichtung konischen verjüngt ausgebildet sein. Der Kopfabschnitt des Befestigungselements verbreitert sich somit entlang einer entgegengesetzt zu der Anbringungsrichtung verlaufenden Erstreckungsrichtung. Die entsprechende Verbreiterung des Kopfabschnitts führt dann beim Anbringen entlang der Anbringungsrichtung dazu, dass der Kopfabschnitt mit einem im Längsschnitt rampenförmig verlaufenden Mantelflächenbereich gegen das Stützelement gepresst wird, wenn das Befestigungselement mit seinem Befestigungsabschnitt an dem Fahrzeugbauteil fixiert wird und hierbei entlang der Anbringungsrichtung relativ zu dem Trägerbauteil verlagert wird.

Das Befestigungselement kann eine Schraube, einen Bolzen oder einen Niet aufweisen, insbesondere kann das Befestigungselement durch eine Schraube, einen Bolzen oder einen Niet gebildet sein.

Das Trägerbauteil ist in einer Ausführungsvariante flächig erstreckt und definiert somit eine sich entlang einer Hauptebene erstreckende Trägerfläche, an der mehrere Funktionskomponenten, zum Beispiel eines Fahrzeug-Fensterhebers, festgelegt, insbesondere vormontiert werden können.

Grundsätzlich kann das Trägerbauteil Funktionselemente eines Fensterhebers tragen, über den eine Fensterscheibe an dem Fahrzeug verstellbar ist. Insbesondere kann das Trägerbauteil zur Nass-Trockenraum-Trennung an einer Fahrzeugtür eingerichtet und vorgesehen sein.

Ein weiterer Aspekt der vorgeschlagenen Lösung betrifft ein Verfahren zur Montage eines zur Festlegung von Funktionskomponenten vorgesehenen Trägerbauteils an einem Fahrzeugteil. Im Rahmen des vorgeschlagenen Montageverfahrens wird an einem Befestigungsbereich des Trägerbauteils aus einem Faserverbundwerkstoff ein Befestigungsabschnitt eines Befestigungselements entlang einer Anbringungsrichtung durch das Material des Trägerbauteils hindurchgeführt, um den Befestigungsabschnitt an dem Fahrzeugbauteil zu fixieren und hierüber das Trägerbauteil an dem Fahrzeugbauteil festzulegen. Eine Durchgangsöffnung für den Befestigungsabschnitt durch das Trägerbauteil hindurch ist hierbei nicht vorgefertigt, sondern wird erst durch die Anbringung des Befestigungselements gebildet. Eine Schraube, ein Bolzen oder ein Niet als Befestigungselement schneidet, oder genauer, bohrt somit die Durchgangsöffnung erst während der Montage, um eine möglichst spielfreie Verbindung zwischen dem Befestigungselement und dem Befestigungsbereich respektive dem Faserverbundwerkstoff des Befestigungsbereichs zu erreichen.

Gegebenenfalls ist an dem Befestigungsbereich eine (das Material des Trägerbauteils nicht vollständig durchdringende) Vorbohrung oder Vorlochung vorgesehen, um die Position vorzugeben, an der ein Befestigungsabschnitt des Befestigungselements durch das Trägerbauteil während der Montage hindurchgeführt werden muss.

In Ergänzung weist das Trägerbauteil an dem Befestigungsbereich ein entlang der Anbringungsrichtung des Befestigungselements vorstehendes Stützelement auf. An diesem Stützelemente liegt ein Kopfabschnitt des Befestigungselements wenigstens kraftschlüssig an, wenn der Befestigungsabschnitt des Befestigungselements durch das Material des Trägerbauteils hindurchgeführt wurde. Die wenigstens kraftschlüssige Anlage des Kopfabschnitts des Befestigungselements an dem Stützelement kann hierbei insbesondere erst dann vorgesehen sein, wenn der Befestigungsabschnitt des Befestigungselements bestimmungsgemäß (beispielsweise vollständig) durch das Material des Trägerbauteils hindurchgeführt und in das Fahrzeugbauteil gesteckt oder gedreht wurde, um hierüber das Trägerbauteil an dem Fahrzeugbauteil festzulegen.

Eine Ausführungsvariante eines vorgeschlagenen Montageverfahrens kann eine Ausführungsvariante einer vorgeschlagenen Trägerbaugruppe nutzen. Vorstehend und nachstehend erläuterte Vorteile und Merkmale von Ausführungsvarianten einer vorgeschlagenen Trägerbaugruppe gelten somit auch für Ausführungsvarianten eines vorgeschlagenen Montageverfahrens und umgekehrt.

Die beigefügten Figuren veranschaulichen exemplarisch mögliche Ausführungsvarianten der vorgeschlagenen Lösung.

### Hierbei zeigen:

- Figur 1: ausschnittsweise in perspektivischer Ansicht mit Blick auf einen Befestigungsbereich mit einem als Ringrippe ausgebildeten Stützelement an einem Trägerbauteil, das eine Aufnahme für einen Kopfabschnitt eines Befestigungselementes definiert, eine Ausführungsvariante einer vorgeschlagenen Trägerbaugruppe;
- Figur 2: ebenfalls in perspektivischer Ansicht und ausschnittsweise das Trägerbauteil der Figur 1 mit Blick auf eine weitere Befestigungsstelle mit einer durch eine Ringrippe gebildete Aufnahme für ein Befestigungselement (vergleiche auch Figur 1);
- Figuren 3-4: ausschnittsweise das Trägerbauteil der Figuren 1 und 2 mit Blick auf eine Rückseite mit eingedrehter Schraube als Befestigungselement (Figur 3) sowie nach Herausdrehen der Schraube (Figur 4);
- Figur 5: schematisch und in Seitenansicht eine Fahrzeugtür mit einem Trägerbauteil, das entsprechend den Figuren 1 bis 4 ausgestaltet sein kann.

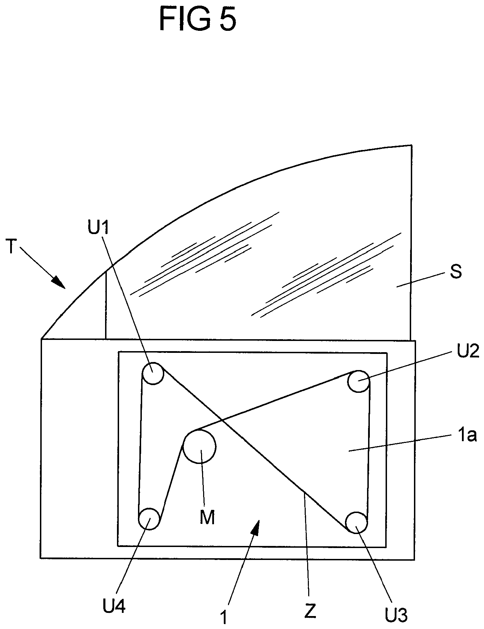

Die Figur 5 zeigt schematisch und in Seitenansicht eine Fahrzeugtür T mit einer verstellbaren Fensterscheibe S. Für eine Verstellung der Fensterscheibe S ist in einem Hohlraum der Fahrzeugtür T ein Fensterheber untergebracht. Dieser Fensterheber weist einen motorischen Antrieb zum Verstellen eines Seilzugs Z auf, der über mehrere Umlenkelemente U1 bis U4, z.B. starre Umlenkstücke oder drehbare Seilrolle, geführt ist, um bei Drehung einer Seiltrommel durch den Antrieb M die Fensterscheibe S anheben oder absenken zu können. Komponenten des Fensterhebers, insbesondere der Antrieb M und/oder die Umlenkelemente U1 bis U4 sowie gegebenenfalls eine die Fensterscheibe S führende Führung und/oder eine einen mit dem Seilzug Z gekoppelte und mit der Fensterscheibe S verbundenen Mitnehmer führende Führungsschiene sind an einer Trägerfläche 1a eines Trägerbauteils 1 festgelegt. Das Trägerbauteil 1 ist flächig erstreckt und kann in der Fahrzeugtür T in an sich bekannter Weise der Nass-Trockenraum-Trennung dienen.

Das flächig erstreckte Trägerbauteil 1 ist vorliegend zu einem Großteil oder sogar nahezu vollständig aus einem Faserverbundwerkstoff, hier einem Organoblech, gebildet. Insbesondere sind Befestigungsstellen des Trägerbauteils 1, um das Trägerbauteil 1 an einem Fahrzeugbauteil der Fahrzeugtür T, zum Beispiel einer Türinnenhaut, wie einem Türinnenblech, festzulegen, aus dem Faserverbundwerkstoff gebildet.

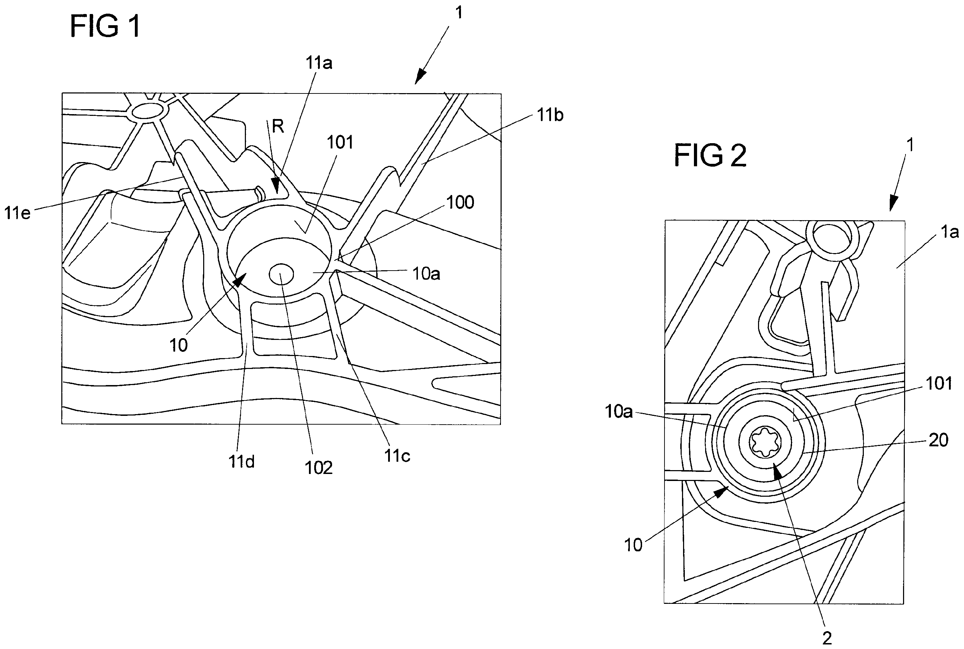

Die Figuren 1 und 2 zeigen mit Blick auf die Trägerfläche 1a ausschnittsweise zwei Befestigungsstellen 10, die jeweils an einen Befestigungsbereich des Trägerbauteils 1 aus Organoblech vorgesehen sind. Für die Festlegung des Trägerbauteils 1 an dem Fahrzeugbauteil der Fahrzeugtür T wird beispielsweise eine selbstschneidende Schraube, ein selbstschneidender Bolzen oder ein Niet verwendet. Mit anderen Worten ist an der Befestigungsstelle 10 jeweils keine Durchgangsöffnung vorgefertigt, durch die sich hindurch ein Abschnitt des jeweiligen Befestigungselements hindurch erstrecken muss, um mit dem Fahrzeugbauteil in Eingriff treten zu können. So wird beispielsweise ein Gewindeabschnitt einer Schraube 2 als Befestigungselement selbstschneidend ausgeführt, sodass eine Durchgangsöffnung an der Befestigungsstelle 10 erst mit dem Eindrehen der Schraube 2 während der Montage entsteht. Aufgrund des hohen Faseranteils und der geringen Dichte des vorliegend verwendeten Organoblechs kommt es nach der Montage kaum zu einem Kriechen und keinem nennenswerten Setzverhaltens. Ein Absinken der Klemmkräfte an der Befestigungsstelle 10 ist damit erheblich reduziert oder kann sogar vollständig ausgeschlossen werden.

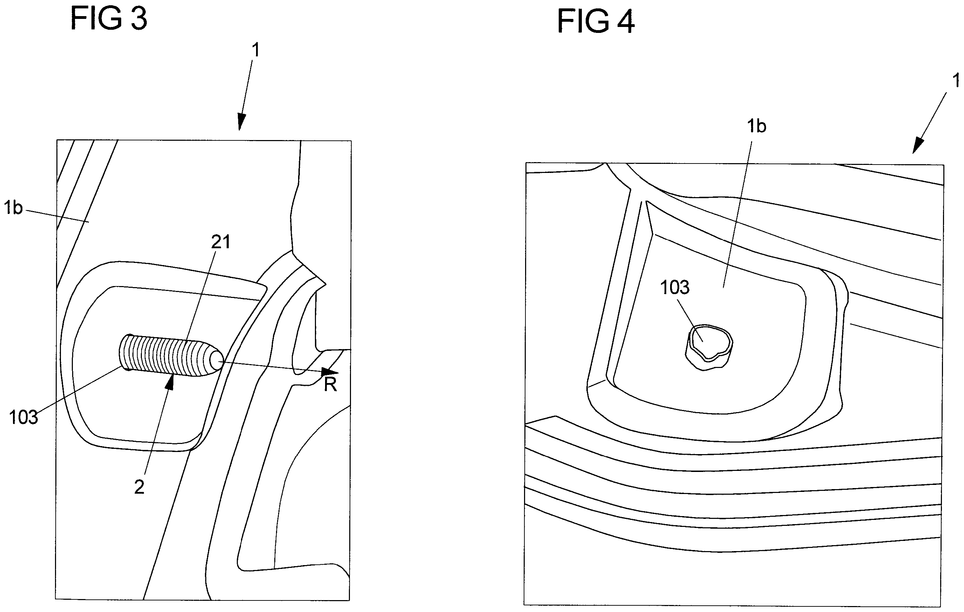

Um zusätzlich die Übertragbarkeit der an der Befestigungsstelle 10 auftretenden Kräfte zu erhöhen, ist an dem Befestigungsbereich 10 der Figuren 1 und 2 jeweils ein Stützelement in Form einer Ringrippe 100 ausgebildet. Diese Ringrippe 100 steht im Wesentlichen senkrecht von der Trägerfläche 1a hervor und damit entlang einer Anbringungsrichtung R, entlang der das jeweilige Befestigungselement, entsprechend der Figuren 2 und 3 beispielsweise eine Schraube S, an dem Trägerbauteil 1 angebracht wird.

Die Ringrippe 100 umrandet eine Aufnahme 10a. Eine umlaufende, konkav gewölbte Innenwand 101 der Ringrippe 100 umschließt somit vollständig die Aufnahme 10a. Die Aufnahme 10a ist dabei derart dimensioniert und mit einem Kopfteil in Form eines Schraubenkopfes 20 der zur Fixierung genutzten Schraube 2 abgestimmt, dass der Schraubenkopf 20 formschlüssig in der Aufnahme 10a aufgenommen und klemmend an der Innenwand 101 anliegt, wenn die Schraube 2 bestimmungsgemäß zur Festlegung des Trägerbauteils 1 eingedreht wurde. Ein kreisscheibenförmiger Schraubenkopf 20 der Schraube 2 liegt somit im bestimmungsgemäß montierten Zustand vollumfänglich umrandet in der Aufnahme 10a vor und kann sich somit gegen die Ringrippe 100 abstützen.

Zur, bezogen auf eine Schraubenlängsachse und der Anbringungsrichtung R, radialen Abstützung sind an der Ringrippe 100 zusätzliche Verstärkungsrippen 11a bis 11e angeformt. Die Verstärkungsrippen 11a bis 11b wie auch die Ringrippe 100 können an dem Organoblech des die Befestigungsstelle 10 ausbildenden Befestigungsbereichs des Trägerbauteils 1 angespritzt sein. Für die Ringrippe 100 wie auch die Verstärkungsrippen 11a bis 11e kann dabei ein anderer oder ein identischer Faserverbundwerkstoff verwendet sein. Beispielsweise ist die Ringrippe 100 als Stützelement aus PP-LGF an das Organoblech des Trägerbauteils 1 angespritzt.

Um an der Befestigungsstelle 10 die exakte Position für das Eindrehen der Schraube 2 auch ohne die Ausbildung einer Durchgangsöffnung vorzugeben, ist in der Aufnahme 10a zentral eine Vertiefung 102 als Positionierhilfe eingeformt. Diese Vertiefung 102 wirkt als das Material des Trägerbauteils nicht durchdringende Vorlochung, an der die Spitze der Schraube 2 angesetzt werden kann, um diese mit ihrem Gewindeabschnitt 21 (als Befestigungsabschnitt des Befestigungselements in Form der Schraube 2) an der Vertiefung 102 durch das Material des Trägerbauteils 1 hindurch zu drehen und an einem Fahrzeugbauteil einzudrehen, um das Trägerbauteil 1 hieran zu fixieren.

Steht dann der Gewindeabschnitt 21 entsprechend der Figur 3 auf einer Rückseite 1b des Trägerbauteils 1 maximal vor, liegt auf der Trägerfläche 1a der scheibenförmigen Schraubenkopf 20 formschlüssig und kraftschlüssig in der Aufnahme 10a aufgenommen vor. Eine durch das Eindrehen der Schraube 2 entstandene Durchgangsöffnung 103, über die sich der Gewindeabschnitt 21 durch das Trägerbauteil 1 hindurch erstreckt, nimmt dann die Schraube 2 spielfrei auf und stellt eine dauerhafte Fixierung des Trägerbauteils 1 an der Befestigungsstelle 10 ohne dass Absinken der Klemmkräfte sicher.

### Bezugszeichenliste

- 1: Trägerbauteil
- 10: Befestigungsstelle
- 100: Ringrippe (Stützelement)
- 101: Innenwand
- 102: Vertiefung
- 103: Durchgangsbohrung
- 10a: Aufnahme
- 11a-11e: Verstärkungsrippe
- 1a: Trägerfläche
- 1b: Rückseite
- 2: Schraube (Befestigungselement)
- 20: Schraubenkopf (Kopfteil)
- 21: Gewindeabschnitt (Befestigungsabschnitt)
- M: Antrieb
- R: Anbringungsrichtung
- S: Fensterscheibe
- T: Fahrzeugtür
- U1-U4: Umlenkelement
- Z: Seilzug

## Patentansprüche

1. Trägerbaugruppe für ein Fahrzeug, mit einem Trägerbauteil (1) zur Festlegung von Funktionskomponenten, das mindestens eine Befestigungsstelle (10) aufweist, an der das Trägerbauteil (1) über ein Befestigungselement (2) der Trägerbaugruppe an einem Fahrzeugbauteil zu befestigen ist, indem das Befestigungselement (2) mit einem Befestigungsabschnitt (21), der sich über eine Durchgangsöffnung (103) entlang einer Anbringungsrichtung (R) durch das Material der Trägerbauteils (1) hindurch erstreckt, an dem Fahrzeugbauteil fixiert ist,
**dadurch gekennzeichnet, dass**
die Befestigungsstelle (10) an einem Befestigungsbereich des Trägerbauteils (1) aus einem Faserverbundwerkstoff vorgesehen ist, der eine Position für die durch das Anbringen des Befestigungselements (2) entlang der Anbringungsrichtung (R) noch zu bildende Durchgangsöffnung (103) vorgibt und der mindestens ein entlang der Anbringungsrichtung (R) vorstehendes Stützelement (100) ausbildet,
wobei an dem Befestigungselement (2) ein zu dem Befestigungsabschnitt (21) verschiedener Kopfabschnitt (20) vorgesehen ist, der an dem vorstehenden Stützelement (100) seitlich wenigstens kraftschlüssig anliegt und abgestützt ist, wenn sich der Befestigungsabschnitt (21) des Befestigungselements (2) bestimmungsgemäß durch das Material des Trägerbauteils (1) hindurch erstreckt und an der Befestigungsstelle (10) Belastungen auftreten, sodass diese Belastungen von dem Befestigungselement (2) auch über das an dem Befestigungsbereich vorstehende Stützelement (100) hinweg übertragen werden.

2. Trägerbaugruppe nach Anspruch 1, **dadurch gekennzeichnet, dass** der Befestigungsbereich mit der Befestigungsstelle (10) durch ein Organoblech gebildet ist.

3. Trägerbaugruppe nach Anspruch 1 oder 2, **dadurch gekennzeichnet, dass** das Stützelement von einem Abschnitt mindestens einer an dem Trägerbauteil (1) ausgeformten Rippe (100) gebildet ist.

4. Trägerbaugruppe nach Anspruch 3, **dadurch gekennzeichnet, dass** die Rippe (100) durch den Faserverbundwerkstoff gebildet ist.

5. Trägerbaugruppe nach Anspruch 3, **dadurch gekennzeichnet, dass** die Rippe (100) an den Befestigungsbereich angespritzt ist.

6. Trägerbaugruppe nach Anspruch 5, **dadurch gekennzeichnet, dass** die Rippe (100) durch einen an den Befestigungsbereich angespritzten Faserverbundwerkstoff gebildet ist.

7. Trägerbaugruppe nach einem der vorhergehenden Ansprüche, **dadurch gekennzeichnet, dass** das Stützelement (100) eine konkav gewölbte Innenwand (101) definiert, an der der Kopfabschnitt (20) kraftschlüssig anliegt.

8. Trägerbaugruppe nach Anspruch 7, **dadurch gekennzeichnet, dass** die konkav gewölbte Innenwand (101) dem Verlauf eines Kreisbogens folgt.

9. Trägerbaugruppe nach einem der vorhergehenden Ansprüche, **dadurch gekennzeichnet, dass** das Stützelement (100) eine im Querschnitt kreisförmige Aufnahme (10a) für den Kopfabschnitt (20) des Befestigungselements (2) definiert.

10. Trägerbaugruppe nach einem der vorhergehenden Ansprüche, **dadurch gekennzeichnet, dass** an dem Stützelement (100) wenigstens eine Schaberippe für eine Verbindung mit dem Kopfabschnitt (20) des Befestigungselements (2) ausgebildet ist.

11. Trägerbaugruppe nach einem der vorhergehenden Ansprüche, **dadurch gekennzeichnet, dass** sich der Kopfabschnitt (20) in Anbringungsrichtung (R) konisch verjüngt.

12. Trägerbaugruppe nach einem der vorhergehenden Ansprüche, **dadurch gekennzeichnet, dass** das Befestigungselement eine Schraube (2), einen Bolzen oder einen Niet aufweist.

13. Trägerbaugruppe nach einem der vorhergehenden Ansprüche, **dadurch gekennzeichnet, dass** das Trägerbauteil (1) flächig erstreckt ist und/oder Funktionskomponenten eines Fensterhebers trägt, über den eine Fensterscheibe verstellbar ist.

14. Verfahren zur Montage eines zur Festlegung von Funktionskomponenten vorgesehenen Trägerbauteils (1) an einem Fahrzeugbauteil,
**dadurch gekennzeichnet, dass**
an einem Befestigungsbereich des Trägerbauteils (1) aus einem Faserverbundwerkstoff ein Befestigungsabschnitt (21) eines Befestigungselements, (2) entlang einer Anbringungsrichtung (R) durch das Material des Trägerbauteils (1) hindurchgeführt wird, um an einer Befestigungsstelle (10) den Befestigungsabschnitt (21) an dem Fahrzeugbauteil zu fixieren und hierüber das Trägerbauteil (1) an dem Fahrzeugbauteil festzulegen, wobei
- eine Durchgangsöffnung (103) für den Befestigungsabschnitt (21) durch das Trägerbauteil (1) erst durch die Anbringung des Befestigungselements (2) gebildet wird und
- ein Kopfabschnitt (20) des Befestigungselements (2) an einem entlang der Anbringungsrichtung (R) vorstehenden Stützelement (100) des Befestigungsbereichs seitlich wenigstens kraftschlüssig anliegt und abgestützt ist, wenn der Befestigungsabschnitt (21) des Befestigungselements (2) durch das Material des Trägerbauteils (1) hindurchgeführt wurde und an der Befestigungsstelle (10) Belastungen auftreten, sodass diese Belastungen auch von dem Befestigungselement (2) über das an dem Befestigungsbereich vorstehende Stützelement (100) hinweg übertragen werden.

## Claims

1. A carrier assembly for a vehicle, comprising a carrier component (1) for fastening functional components, which includes at least one fastening point (10) at which the carrier component (1) is to be fastened to a vehicle component via a fastening element (2) of the carrier assembly, in that the fastening element (2) is fixed to the vehicle component with a fastening portion (21) which via a through-opening (103) extends along a direction of attachment (R) through the material of the carrier component (1) to which the vehicle component is fixed,
**characterized in that**
the fastening point (10) is provided at a fastening area of the carrier component (1) made of a fibre composite material, which specifies a position for the through-opening (103) yet to be formed by attaching the fastening element (2) along a direction of attachment (R) and which forms at least one support element (100) protruding along the direction of attachment (R),
wherein a head portion (20), which is different from the fastening portion (21), is provided on the fastening element (2), which head portion (20) rests laterally at least in a non-positive manner against the protruding support element (100) and is supported when the fastening portion (21) of the fastening element (2) properly extends through the material of the carrier component (1) and loads occur at the fastening point (10), so that these loads are also transmitted by the fastening element (2) beyond the support element (100) protruding at the fastening area.

2. The carrier assembly according to claim 1, **characterized in that** the fastening area with the fastening point (10) is formed by an organo-sheet.

3. The carrier assembly according to claim 1 or 2, **characterized in that** the support element is formed by a portion of at least one rib (100) integrally molded to the carrier component (1).

4. The carrier assembly according to claim 3, **characterized in that** the rib (100) is formed by the fibre composite material.

5. The carrier assembly according to claim 3, **characterized in that** the rib (100) is injection-molded to the fastening area.

6. The carrier assembly according to claim 5, **characterized in that** the rib (100) is formed by a fibre composite material injection-molded to the fastening area.

7. The carrier assembly according to any of the preceding claims, **characterized in that** the support element (100) defines a concavely curved inner wall (101) against which the head portion (20) rests in a non-positive manner.

8. The carrier assembly according to claim 7, **characterized in that** the concavely curved inner wall (101) follows the course of a circular arc.

9. The carrier assembly according to any of the preceding claims, **characterized in that** the support element (100) defines a receptacle (10a) of circular cross-section for the head portion (20) of the fastening element (2).

10. The carrier assembly according to any of the preceding claims, **characterized in that** at the support element (100) at least one scraping rib is formed for connection to the head portion (20) of the fastening element (2).

11. The carrier assembly according to any of the preceding claims, **characterized in that** the head portion (20) tapers conically in the direction of attachment (R).

12. The carrier assembly according to any of the preceding claims, **characterized in that** the fastening element includes a screw (2), a bolt or a rivet.

13. The carrier assembly according to any of the preceding claims, **characterized in that** the carrier component (1) is extended in a planar manner and/or carries functional components of a window lifter via which a window pane is adjustable.

14. A method for mounting a carrier component (1) provided for fastening functional components on a vehicle component,
**characterized in that**
on a fastening area of the carrier (1) made of a fibre composite material a fastening portion (21) of a fastening element (2) is guided through the material of the carrier component (1) along a direction of attachment (R) in order to fix the fastening portion (21) on a fastening portion (21) on the vehicle component and thereby fasten the carrier component (1) to the vehicle component, wherein
- a through-opening (103) for the fastening portion (21) through the carrier component (1) only is formed by the attachment of the fastening element (2), and
- a head portion (20) of the fastening element (2) at least non-positively rests laterally against a support element (100) of the fastening area protruding along the direction of attachment (R) and is supported when the fastening portion (21) of the fastening element (2) has been guided through the material of the carrier component (1) and loads occur at the fastening point (10), so that these loads are also transmitted by the fastening element (2) beyond the support element (100) protruding at the fastening area.

## Revendications

1. Module de support pour un véhicule, avec un composant de support (1) destiné à immobiliser des composants fonctionnels, qui présente au moins un emplacement de fixation (10), sur lequel le composant de support (1) doit être fixé sur un composant de véhicule par l'intermédiaire d'un élément de fixation (2) du module de support, en ce que l'élément de fixation (2) est bloqué sur le composant de véhicule avec une section de fixation (21), qui s'étend à travers le matériau du composant de support (1) de part en part en passant par une ouverture de passage (103) le long d'une direction d'installation (R),
**caractérisé en ce que**
l'emplacement de fixation (10) est prévu sur une zone de fixation du composant de support (1) composé d'un matériau composite à base de fibres, qui spécifie une position pour l'ouverture de passage (103) restant à former par l'installation de l'élément de fixation (2) le long de la direction d'installation (R) et qui réalise au moins un élément d'appui (100) faisant saillie le long de la direction d'installation (R),
dans lequel est prévue, sur l'élément de fixation (2), une section de tête (20) différente par rapport à la section de fixation (21), laquelle repose et est soutenue au moins à force latéralement sur l'élément d'appui (100) faisant saillie lorsque la section de fixation (21) de l'élément de fixation (2) s'étend conformément à l'usage prévu à travers le matériau du composant de support (1) et qu'apparaissent sur l'emplacement de fixation (10) des contraintes si bien que lesdites contraintes sont transmises par l'élément de fixation (2) également au-delà de l'élément d'appui (100) faisant saillie sur la zone de fixation.

2. Module de support selon la revendication 1, **caractérisé en ce que** la zone de fixation est formée par une tôle organique avec l'emplacement de fixation (10).

3. Module de support selon la revendication 1 ou 2, **caractérisé en ce que** l'élément d'appui est formé par une section d'au moins une nervure (100) formée sur le composant de support (1).

4. Module de support selon la revendication 3, **caractérisé en ce que** la nervure (100) est formée par le matériau composite à base de fibres.

5. Module de support selon la revendication 3, **caractérisé en ce que** la nervure (100) est appliquée par injection sur la zone de fixation.

6. Module de support selon la revendication 5, **caractérisé en ce que** la nervure (100) est formée par un matériau composite à base de fibres appliqué par injection sur la zone de fixation.

7. Module de support selon l'une quelconque des revendications précédentes, **caractérisé en ce que** l'élément d'appui (100) définit une paroi intérieure (101) bombée de manière concave, sur laquelle la section de tête (20) repose à force.

8. Module de support selon la revendication 7, **caractérisé en ce que** la paroi intérieure (101) bombée de manière concave suit le contour d'un arc de cercle.

9. Module de support selon l'une quelconque des revendications précédentes, **caractérisé en ce que** l'élément d'appui (100) définit un logement (10a) de forme circulaire dans la section transversale pour la section de tête (20) de l'élément de fixation (2).

10. Module de support selon l'une quelconque des revendications précédentes, **caractérisé en ce qu'**au moins une nervure de raclage pour une liaison à la section de tête (20) de l'élément de fixation (2) est réalisée sur l'élément d'appui (100).

11. Module de support selon l'une quelconque des revendications précédentes, **caractérisé en ce que** la section de tête (20) se rétrécit de manière conique dans la direction d'installation (R).

12. Module de support selon l'une quelconque des revendications précédentes, **caractérisé en ce que** l'élément de fixation présente une vis (2), un boulon ou un rivet.

13. Module de support selon l'une quelconque des revendications précédentes, **caractérisé en ce que** le composant de support (1) s'étend à plat et/ou supporte des composants fonctionnels d'un lève-vitre, par l'intermédiaire duquel une vitre de fenêtre peut être ajustée.

14. Procédé de montage d'un composant de support (1) prévu pour l'immobilisation de composants fonctionnels sur un composant de véhicule,
**caractérisé en ce que**
une section de fixation (21) d'un élément de fixation (2) est guidée à travers le matériau du composant de support (1) le long d'une direction d'installation (R) sur une zone de fixation du composant de support (1) composé d'un matériau composite à base de fibres pour bloquer sur le composant de véhicule la section de fixation (21) sur un emplacement de fixation (10) et pour immobiliser ainsi le composant de support (1) sur le composant de véhicule, dans lequel
- une ouverture de passage (103) pour la section de fixation (21) à travers le composant de support (1) est formée d'abord par l'installation de l'élément de fixation (2), et
- une section de tête (20) de l'élément de fixation (2) repose et est soutenue au moins à force latéralement sur un élément d'appui (100), faisant saillie le long de la direction d'installation (R), de la zone de fixation lorsque la section de fixation (21) de l'élément de fixation (2) a été guidée à travers le matériau du composant de support (1) de part en part et que des contraintes apparaissent sur l'emplacement de fixation (10) si bien que ces contraintes sont transmises également par l'élément de fixation (2) au-delà de l'élément d'appui (100) faisant saillie sur la zone de fixation.
